# EUROPEAN PATENT SPECIFICATION

(11) **EP 3 398 745 B1**
(45) Date of publication and mention of the grant of the patent: **08.09.2021**
(21) Application number: 16882959.6
(22) Date of filing: 08.01.2016
(51) Int. Cl.: B28D 1/06, B28D 1/08, B28D 7/00, B23D 57/00

(54) **CUTTING LOAD RELEASE DEVICE FOR CUTTING EQUIPMENT**
SCHNEIDLASTFREIGABEVORRICHTUNG FÜR SCHNEIDAUSRÜSTUNG
DISPOSITIF DE LIBÉRATION DE CHARGE DE COUPE POUR ÉQUIPEMENT DE COUPE

(43) Date of publication of application: 07.11.2018
(73) Proprietor: Chen, Liwen, Shenzhen, Guangdong 518000 (CN)
(72) Inventor: Chen, Liwen, Shenzhen, Guangdong 518000 (CN)
(74) Representative: Manitz Finsterwald Patent- und Rechtsanwaltspartnerschaft mbB
(86) International application number: PCT/CN2016/070518
(87) International publication number: WO 2017/117814

(56) References cited:
- EP-A1- 2 535 144
- WO-A1-02/070219
- CN-A- 102 179 878
- CN-A- 104 260 193
- CN-U- 204 414 316
- CN-U- 204 414 316
- CN-U- 205 466 768
- CN-U- 205 466 772
- JP-A- H0 970 746
- JP-A- H11 170 245
- JP-A- 2001 300 848
- KR-B1- 100 501 213

## Description

### FIELD OF THE INVENTION

The present invention relates to the field of cutting equipment technology, and more particularly, to a cutting load release device for a cutting equipment according to the preamble of claim 1.

### BACKGROUND

In the prior art, for a plurality of cutting equipment, including a wire saw machine, there is at least one problem existing as follows: during a cutting process, when a piece of concrete of a building is in cut, a cut part may sink down due to a weight thereof, for example, when a common concrete support beam is being cut and removed, a concrete been cut may sink and form a falling object, generating a pretty large gravity thereof, in tons or even tens of tons, thus, according to that, the falling object is able to drive a diamond beaded rope together with the machine sink for a few centimeters or over a dozen centimeters, and this may cause the diamond beaded rope to be broken, followed by a plurality of injuries or damages, or this may cause the machine damaged with a plurality of frequent failures, and greatly reduce a service life of the machine.

And, to such a problem mentioned above, in the prior art, a common solution is achieved by making a part of the machine break automatically, to preserve a main part of the machine and avoid the diamond beaded rope from being broken. For example, by making a chain of a rotating device break automatically, a rotating gear break, or a protective pin break, in order to preserve the main part of the machine, and avoid the diamond beaded rope from being broken. However, such a solution may affect a working period, reduce a working efficiency, and increase a cost of production, due to it is needed to replace the part broken. An example for a state of the art wire saw is given by EP 2 535 144 A1, which discloses the preamble of claim 1.

It is an object of the invention to improve and develop the current technology. This object is satisfied by the subject matter of claim 1.

### BRIEF SUMMARY OF THE DISCLOSURE

The purpose of the present invention is overcoming a plurality of defects in the prior art and providing a cutting load release device for a cutting equipment, in order to solve a plurality of problems in the prior art that, due to the cutting equipment adopting a method of breaking some of a plurality of parts to preserve a main part of a machine and secure a cutting tool when a cutting object falls off, and that causes the cutting equipment a plurality of problems, including a discontinuous working period, a trouble-some and time-costing maintenance, a low working efficiency, and a high production cost.

The present invention is thus realized by a cutting load release device for the cutting equipment, comprising
a supporting frame, applied to mounting a plurality of components and supporting the components, the supporting frame comprises a first supporting arm;
a rotating arm, applied to moving the plurality of components thereon by rotating, and making the components be able to move to another position when the components are being pressed, the rotating arm comprises a first end and a second end arranged opposite to the first end, the first end of the rotating arm is arranged rotatably on the first supporting arm, while between the rotating arm and the first supporting arm, there is an initial region, which provides the rotating arm to be stationary relative to the first supporting arm, and a rotation region arranged, which provides the rotating arm to be rotatable relative to the first supporting arm;
a cutting tool comprising a working wheel and a diamond beaded rope winding on the working wheel, applied to cutting the cutting object, the cutting tool is arranged rotatably on the second end of the rotating arm; and
the load release mechanism, applied to performing an unloading operation on an abnormally large load afforded by the cutting tool, due to an abnormal condition, the load release mechanism comprises a load release recovery component, which may unload the abnormally large load afforded by the cutting tool and drive the rotating arm return to the initial region from the rotation region, wherein one end of the load release recovery component connects to the supporting frame, while another end of the load release recovery component connects to the rotating arm.

Preferably, the load release recovery component is an extension spring.

Preferably, one end of the extension spring connects to the first supporting arm, while another end of the extension spring is connected to the rotating arm, and close to the cutting tool arranged on the rotating arm, while a centerline of the extension spring overlaps a centerline of the rotating arm when the rotating arm locates in the initial region.

Preferably, the supporting frame further comprises a second supporting arm, the second supporting arm is arranged above the first supporting arm;
one end of the extension spring connects to the second supporting arm, and another end of the extension spring is connected to the rotating arm, close to the cutting tool arranged on the rotating arm, while the centerline of the extension spring has an angle θ away from the centerline of the rotating arm when the rotating arm locates in the initial region, and 0°< θ <90°.

Preferably, the supporting frame further comprises the second supporting arm and a third supporting arm, the third supporting arm is located above and arranged opposite to the rotating arm, and the third supporting arm is arranged in parallel to the rotating arm when the rotating arm locates in the initial region, one end of the second supporting arm connects to the first supporting arm, while another end of the second supporting arm connects to the third supporting arm;
one end of the extension spring connects to the third supporting arm, another end of the extension spring is connected to the rotating arm, and close to the cutting tool arranged on the rotating arm, while the centerline of the extension spring is perpendicularly intersecting to the centerline of the rotating arm when the rotating arm locates in the initial region.

Preferably, the load release recovery component is a compression spring.

Preferably, the supporting frame comprises the second supporting arm and the third supporting arm, the third supporting arm is located below and arranged opposite to the rotating arm, and the third supporting arm is arranged in parallel to the rotating arm when the rotating arm locates in the initial region, one end of the second supporting arm connects to the first supporting arm, while another end of the second supporting arm connects to the third supporting arm;
one end of the compression spring connects to the third supporting arm, another end of the compression spring is connected to the rotating arm, and close to the cutting tool arranged on the rotating arm, while the centerline of the compression spring is perpendicularly intersecting to the centerline of the rotating arm when the rotating arm locates in the initial region.

Preferably, the cutting load release device further comprises a fixation mechanism, applied to locking and fixing the rotating arm, in order to fix the rotating arm at any one position between the initial region and the rotation region.

Preferably, the fixation mechanism comprises a locking screw; one end of the locking screw connects to the rotating arm, while another end thereof connects to the first supporting arm.

Preferably, the fixation mechanism comprises a vibration damping pad, and a holder applied to holding and positioning the vibration damping pad, the holder connects fixedly to the supporting frame, and the holder has an accommodation groove arranged, applied to accommodating the vibration damping pad, the accommodation groove accommodates a connection part between the rotating arm and the first supporting arm; the vibration damping pad is arranged in the accommodation groove, and touches both of the rotating arm and the first supporting arm.

A technical effect of the cutting load release device for cutting equipment is: when the cutting tool cuts the cutting object specified, if a part being cut appears to be falling, an action force generated by the part being cut during falling will act directly onto the cutting tool; the cutting tool will transfer a force to the rotating arm after being stressed; the rotating arm will drive the load release recovery component rotate to the rotation region from the initial region after being stressed, and rotate to a corresponding position in the rotation region according to a size of the action force applied hereto, so as to prevent the cutting tool from being crushed by the falling object, attenuate and release the action force that the rotating arm is stressed, by the load release recovery component; when the action force on the rotating arm is attenuated to a certain extent, if a force value of the action force is less than that of a restoring force of the load release recovery component, the load release recovery component will drive the rotating arm return slowly to the initial region from the rotation region, according to an attenuation of the action force on the rotating arm.

Additionally, when the cutting tool is cutting the cutting object specified, if a certain part of the cutting object makes a cutting resistance acted on the cutting tool increase in a sudden, due to a plurality of factors including a difference in a dense or a material, the cutting tool will transfer the action force stressed thereof to the rotating arm; after being stressed, the rotating arm will drive the load release recovery component rotate to the rotation region from the initial region, and rotate to the corresponding position in the rotation region according to the size of the action force applied hereto, so as to prevent the cutting tool from being damaged by the resistance increased in a sudden, attenuate and release the action force that the rotating arm is stressed, by the load release recovery component; when the action force on the rotating arm is attenuated to a certain extent, if the force value of the action force is less than that of the restoring force of the load release recovery component, the load release recovery component will drive the rotating arm return slowly to the initial region from the rotation region, according to an attenuation of the action force on the rotating arm.

All above, the cutting load release device for cutting equipment has a plurality of advantages listed below:
1. when the cutting tool cuts into a harder material or gets stuck during cutting, the load release recovery action of the load release recovery component may be applied to buffering the cutting tool, thus decreasing a possibility of damage; at a same time, due to a great decrease on the possibility of damage of the cutting tool, thus an accident of damage and injury caused by the cutting tool is also greatly reduced, which facilitates to ensure a safety of an operator;
2. due to a relaxation role of the load release recovery component during the cutting, the cutting tool has a relatively uniform force in cutting, and accordingly, a consumption of both wear and tear of the cutting tool will decrease greatly, which facilitates to extend the service life of the cutting tool, decrease the cost and improve a cutting efficiency; while being able to decrease a cost of an energy consumption, labor and machine use; moreover, comparing to the prior arts, it decreases a limit of requiring an experienced technician to operate the cutting equipment, thus it further lowers the production cost;
3. arranging and using the cutting load release device makes it possible to make a buffer action to a circuit, an oil route, a mechanical transmission system of the machine as a whole, thus, to the machine as a whole, it is possible to reduce a maintenance rate, a failure rate, and a maintenance cost of the machine greatly; while it is possible to guarantee and extend a continuous working period of the cutting equipment, and make the efficiency and a productivity of the machine improve greatly during the working period, thereby reducing a labor cost and improving the production efficiency greatly;
4. comparing to the prior art that adopting a method of protecting the machine in a whole and the cutting tool by damaging some parts, in a case of the part being cut from the concrete of the building is dropping, a setting of the cutting load release device described in the present application, may facilitate to guarantee not only no damage to any parts, but also the working period to be continuous, thus it is possible to improve the working efficiency and reduce the working cost;
5. since the setting of the cutting load release device is able to greatly reduce a limitation of a load carried by the machine in a whole, thus, it is possible to reduce a use of a plurality of manufacturing materials, lower a whole weight of the machine, making the machine lighter and more convenient for a transportation and an assembly, while the production cost is lower and a price is more affordable;
6. through a setting of the fixation mechanism, it is possible to fix the rotating arm to any one position between the initial region and the rotation region, thus making the rotating arm from arranging rotatablly on the first supporting arm and being able to be adjusted freely, to arranging fixedly on the first supporting arm. Therefore, in a case of taking an processing efficiency of the cutting device as a first priority, it is possible to fix the rotating arm in the initial region by the fixation mechanism, and the cutting tool will also be fixed following a fixation of the rotating arm, that makes the cutting tool locating in the initial region have a best cutting efficiency, and it is possible to adjust the cutting equipment in a whole to be one having a high processing efficiency;
7. a setting of the vibration damping pad in the fixation mechanism is possible to have a different hardness, according to an actual requirement. If in a case, it is needed for the vibration damping pad to totally resist both of the rotating arm and the first supporting arm, so as to fix the rotating arm in the initial region, it is possible to select a vibration damping pad with a Shore hardness of 70-100 HA, and most of the cases like this are taking the processing efficiency of the cutting device as a first priority; if it is needed that the vibration damping pad makes an action of buffering and damping to the rotating arm, it is possible to select the vibration damping pad with the Shore hardness of 30-60 HA. Also, it may be seen that, the setting of the vibration damping pad may be flexibly set according to an actual situation and a customer need.

### BRIEF DESCRIPTION OF THE DRAWINGS

FIG. 1 illustrates a schematic diagram of a cutting load release device for cutting equipment described in the present application;
FIG. 2 illustrates a schematic diagram of another embodiment on the cutting load release device for the cutting equipment described in the present application;
FIG. 3 illustrates a schematic diagram on a rotating arm when turning to a rotation region of the cutting load release device for the cutting equipment described in the present application;
FIG. 4 illustrates a schematic diagram of another embodiment on the cutting load release device for the cutting equipment described in the present application;
FIG. 5 illustrates a schematic diagram of another embodiment on the cutting load release device for the cutting equipment described in the present application;
FIG. 6 illustrates a schematic diagram of another embodiment on the cutting load release device for the cutting equipment described in the present application;
FIG. 7 illustrates a schematic diagram of the cutting load release device for the cutting equipment as shown in FIG. 6 in another angle.

### DETAILED DESCRIPTION OF EMBODIMENTS

In order to make the purpose, technical solution and the advantages of the present invention clearer and more explicit, further detailed descriptions of the present invention are stated hereafter, referencing to a plurality of attached drawings and some preferred embodiments of the present invention. It should be understood that a plurality of detailed embodiments of the invention described here are used to explain the present invention only, instead of limiting the present invention.

### Embodiment I:

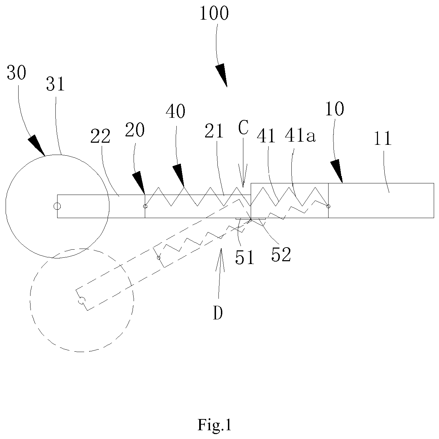

Referencing to FIG. 1, detailed descriptions on a first embodiment of a cutting load release device for cutting equipment described in the present application are stated below.

The cutting equipment described in the present embodiment is illustrated by taking a wire saw machine as an example, of course, such cutting equipment may also be one in a plurality of other technical fields; and a cutting object is mainly a building concrete, a marble block and more; a cutting load release device 100 comprises a supporting frame 10, a rotating arm 20, a cutting tool 30 and a load release mechanism 40, more descriptions on each of a plurality of parts in the cutting load release device for cutting equipment are stated below:
the supporting frame 10 is applied to mounting a plurality of components and supporting the components, wherein, the supporting frame 10 comprises a first supporting arm 11;
the rotating arm 20 is applied to moving a plurality of components thereon by rotating, and making the components be able to move to another position when the components are being pressed, wherein, the rotating arm 20 comprises a first end 21 and a second end 22 arranged opposite to the first end 21, the first end 21 of the rotating arm 20 is arranged rotatably on the first supporting arm 11, while between the rotating arm 20 and the first supporting arm 11, there is an initial region C, which provides the rotating arm 20 to be stationary relative to the first supporting arm 11, and a rotation region D arranged, which provides the rotating arm 20 to be rotatable relative to the first supporting arm 11;
the cutting tool 30 is applied to cutting a cutting object, wherein, the cutting tool 30 is arranged rotatably on the second end 22 of the rotating arm 20; specifically, the cutting tool 30 comprises a working wheel 31, and a diamond beaded rope winding on the working wheel 31, to contact and cut a cutting object specified;
the load release mechanism 40 is applied to performing an unloading operation on an abnormally large load afforded by the cutting tool 30, due to an abnormal condition, wherein, the load release mechanism 40 comprises a load release recovery component 41, which may unload the abnormally large load afforded by the cutting tool 30 and drive the rotating arm 20 return to the initial region C from the rotation region D, one end of the load release recovery component 41 connects to the supporting frame 10, while another end of the load release recovery component 41 connects to the rotating arm 20.
when the cutting tool 30 cuts the cutting object specified, if a part being cut appears to be falling, an action force generated by the part being cut during falling will act directly onto the cutting tool 30; the cutting tool 30 will transfer a force to the rotating arm 20 after being stressed; the rotating arm 20 will drive the load release recovery component 40 rotate to the rotation region D from the initial region C after being stressed, and rotate to a corresponding position in the rotation region D according to a size of the action force applied hereto, so as to prevent the cutting tool 30 from being crushed by the falling object, attenuate and release the action force that the rotating arm 20 is stressed, by the load release recovery component 41; when the action force on the rotating arm 20 is attenuated to a certain extent, if a force value of the action force is less than that of a restoring force of the load release recovery component 41, the load release recovery component 41 will drive the rotating arm 20 return slowly to the initial region C from the rotation region D, according to an attenuation of the action force on the rotating arm 20.

Besides, when the cutting tool 30 is cutting the cutting object specified, if a certain part of the cutting object makes a cutting resistance acted on the cutting tool 30 increase in a sudden, due to a plurality of factors including a difference in a dense or a material (for example, an uneven material in a marble block), the cutting tool 30 will transfer the action force stressed thereof to the rotating arm 20; after being stressed, the rotating arm 20 will drive the load release recovery component 41 rotate to the rotation region D from the initial region C, and rotate to a corresponding position in the rotation region D, according to a size of the action force applied hereto, so as to prevent the cutting tool 30 from being damaged by the resistance increased in a sudden, attenuate and release the action force that the rotating arm 20 is stressed, by the load release recovery component 41; when the action force on the rotating arm 20 is attenuated to a certain extent, if the force value of the action force is less than that of the restoring force of the load release recovery component 41, the load release recovery component 41 will drive the rotating arm 20 return slowly to the initial region C from the rotation region D, according to an attenuation of the action force on the rotating arm 20.

All above, the cutting load release device 100 for cutting equipment described in the present embodiment, has a plurality of advantages listed below:
1, when the cutting tool 30 cuts into a harder material or gets stuck during cutting, understandably, when the diamond beaded rope on the working wheel 31 cuts into a harder material or gets stuck during cutting, the load release recovery action of the load release recovery component 41 may be applied to buffering the diamond beaded rope, thus decreasing a possibility of damage; at a same time, due to a great decrease on the possibility of damage of the diamond beaded rope, thus an accident of damage and injury caused by the diamond beaded rope is also greatly reduced, which facilitates to ensure a safety of an operator;
2. due to a relaxation role of the load release recovery component 41 during the cutting, the cutting tool 30 has a relatively uniform force in cutting, and accordingly, a consumption of both wear and tear of the cutting tool 30 will decrease greatly, which facilitates to extend the service life of the cutting tool 30, decrease the cost and improve a cutting efficiency; while being able to decrease a cost of an energy consumption, labor and machine use; moreover, comparing to the prior arts, it decreases a limit of requiring an experienced technician to operate the cutting equipment, thus it further lowers the production cost;
3. arranging and using the cutting load release device 100, making it possible to make a buffer action to a circuit, an oil route, a mechanical transmission system of the machine as a whole, thus, to the machine as a whole, it is possible to reduce a maintenance rate, a failure rate, and a maintenance cost of the machine greatly; while it is possible to guarantee and extend a continuous working period of the cutting equipment, and make the efficiency and a productivity of the machine improve greatly during the working period, thereby reducing a labor cost and improving the production efficiency greatly;
4. comparing to the prior art that adopting a method of protecting the machine in a whole and the cutting tool by damaging some parts, in a case of the part being cut from the concrete of the building is dropping, a setting of the cutting load release device 100 described in the present application, may facilitate to guarantee not only no damage to any parts, but also the working period to be continuous, thus it is possible to improve the working efficiency and reduce the working cost;
5. since the setting of the cutting load release device 100 is able to greatly reduce a limitation of a load carried by the machine in a whole, thus, it is possible to reduce a use of a plurality of manufacturing materials, lower a whole weight of the machine, making the machine lighter and more convenient for a transportation and an assembly, while the production cost is lower and a price is more affordable;

Referencing again to FIG. 1, the load release recovery component 41 is an extension spring 41a, wherein, the extension spring 41a is also called a en extension spring or tension spring, which is a coil spring that takes an axial tension. The extension spring 41a is generally made by a material with a round cross-section, of course, the extension spring 41a may also be made by a material with other shaped cross-section including a rectangular cross-section. When there is no load applied, two coils in the extension spring 41a are usually close to each other without any gaps. Wherein, when the rotating arm 20 is locating in the initial region C, the extension spring 41a is contracted to close; when the rotating arm 20 turns to the rotation region D, the extension spring 41a may stretch and extend according to a size of the action force transmitted from the rotating arm 20. In addition, the extension spring 41a is convenient to both manufacturing and installation.

Then, when the cutting tool 30 is pressed, the extension spring 41a is stretched and extended following a rotation of the rotating arm 20, that buffers and attenuates the action force transmitted after the rotating arm 20 is pressed, so as to achieve an aim of load releasing to the cutting tool 30; when the action force on the rotating arm 20 is attenuated to a certain extent, if a force value of the action force is less than that of a restoring force of the extension spring 41a, the extension spring 41a will drive the rotating arm 20 return slowly to the initial region C from the rotation region D, according to an attenuation of the action force on the rotating arm 20, while the extension spring 41a will also retract to close following the rotating arm 20 returning to the initial region C from the rotation region D.

Preferably, one end of the extension spring 41a connects to the first supporting arm 11, while another end of the extension spring 41a is connected to the rotating arm 20, and close to the cutting tool 30 arranged on the rotating arm 20, while a centerline of the extension spring 41a overlaps a centerline of the rotating arm 20 when the rotating arm 20 locates in the initial region C, that means, an angle between the centerline of the extension spring 41a and the centerline of the rotating arm 20 locating in the initial region C is 0°.

Continue referencing to FIG. 1, the first end 21 of the rotating arm 20 in the present embodiment has a first rotation portion 51 arranged, and the first supporting arm 11 has a second rotation portion 52 arranged, which fits the first rotation portion 51 in rotation, the first end 21 of the rotating arm 20 fits the second rotation portion 52 in rotation through the first rotation portion 51 before being arranged on the first supporting arm 11 in rotation, wherein, by arranging the first rotation portion 51 and the second rotation portion 52, it achieves a setting in rotation between the first end 21 of the rotating arm 20 and the first supporting arm 11 simply and affectively.

In order to facilitate installing and setting, the first rotation portion 51 is arranged on a bottom end of the first end 21 of the rotating arm 20, the second rotation portion 52 is arranged on a bottom end of the first supporting arm 11, while the first rotation portion 51 and the second rotation portion 52 connect in a combined way, forming a hinge.

Of course, an implementation of the first rotation portion 51 and the second rotation portion 52 is not limited thereto, it is also possible to set the first rotation portion 51 to be a bearing or a plug shaft, while the second rotation portion 52 is set accordingly to be a plug shaft or a bearing. Wherein, a fitting in rotation between the plug shaft and the bearing, not only better achieves the fitting in rotation between the first end 21 of the rotating arm 20 and the first supporting arm 11, but also facilitates the manufacturing and installation.

A working principle of the cutting load release device 100 for the cutting equipment is further described below, referencing to the attached drawings:
When the cutting tool 30 is cutting the cutting object specified, if a part being cut appears to be falling, an action force generated by the part being cut during falling will act directly onto the cutting tool 30; the cutting tool 30 will transfer a force to the rotating arm 20 after being stressed; the rotating arm 20 will drive the load release recovery component 41 rotate to the rotation region D from the initial region C after being stressed, and rotate to a corresponding position in the rotation region D according to a size of the action force applied hereto, so as to prevent the cutting tool 30 from being crushed by the falling object, attenuate and release the action force that the rotating arm 20 is stressed, by the load release recovery component 41; when the action force on the rotating arm 20 is attenuated to a certain extent, if a force value of the action force is less that a restoring force of the load release recovery component 41, the load release recovery component 41 will drive the rotating arm 20 return slowly to the initial region C from the rotation region D, according to an attenuation of the action force on the rotating arm 20.

Additionally, when the cutting tool 30 is cutting the cutting object specified, if a certain part of the cutting object makes a cutting resistance acted on the cutting tool 30 increase in a sudden, due to a plurality of factors including a difference in a dense or a material (for example, an uneven material in a marble block), the cutting tool 30 will transfer the action force stressed thereof to the rotating arm 20; after being stressed, the rotating arm 20 will drive the load release recovery component 41 rotate to the rotation region D from the initial region C, and rotate to a corresponding position in the rotation region D according to a size of the action force applied hereto, so as to prevent the cutting tool from being damaged by the resistance increased in a sudden, attenuate and release the action force that the rotating arm 20 is stressed, by the load release recovery component 41; when the action force on the rotating arm 20 is attenuated to a certain extent, if the force value of the action force is less that the restoring force of the load release recovery component 41, the load release recovery component 41 will drive the rotating arm 20 return slowly to the initial region C from the rotation region D, according to an attenuation of the action force on the rotating arm 20.

### Embodiment II:

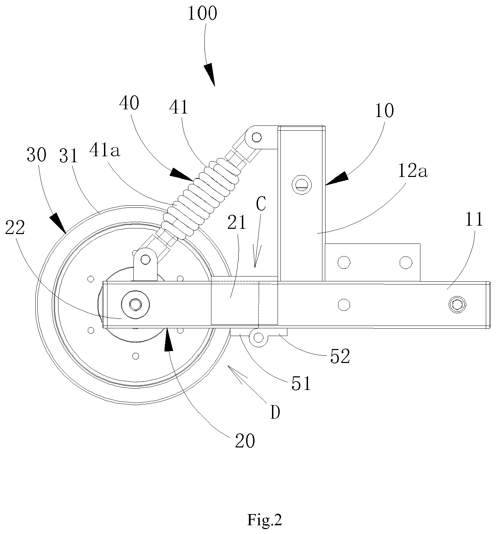

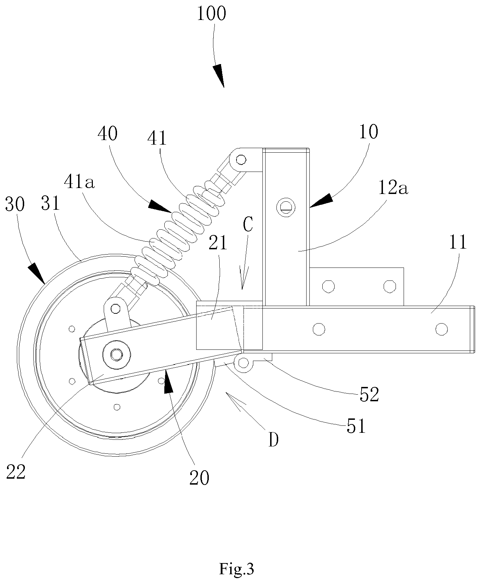

Referencing to FIG. 2 and FIG. 3, an implementation of the embodiment II is similar to that of the embodiment I, detailed descriptions may be referencing to that of the embodiment I, and will not be stated in details herein. However, a difference in between is:

In the embodiment I, one end of the extension spring 41a connects to the first supporting arm 11, while another end of the extension spring 41a is connected to the rotating arm 20, and close to the cutting tool 30 arranged on the rotating arm 20, while a centerline of the extension spring 41a overlaps a centerline of the rotating arm 20 when the rotating arm 20 locates in the initial region C.

In the embodiment II, the supporting frame 10 further comprises a second supporting arm 12a, the second supporting arm 12a is arranged above the first supporting arm 11;

one end of the extension spring 41a connects to the second supporting arm 12a, and another end of the extension spring 41a is connected to the rotating arm 20, close to the cutting tool 30 arranged on the rotating arm 20, so as to ensure that the extension spring 41a is able to receive the action force transmitted from the rotating arm 20 fast, without affecting the cutting tool 30, which facilitates a purpose of load release for the cutting tool 30; while the centerline of the extension spring 41a has an angle θ away from the centerline of the rotating arm 20 when the rotating arm 20 locates in the initial region C, and 0°< θ <90°. Preferably, the angle is set as 45°, in order to make the extension spring 41a generate an elastic cushion force better, and ensure the load release for the cutting tool 30.

### Embodiment III:

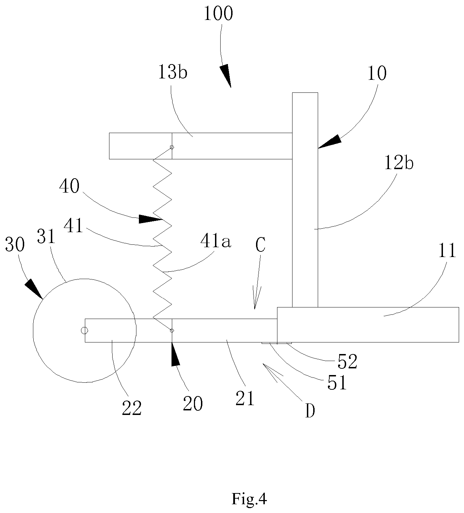

Referencing to FIG. 4, an implementation of the embodiment III is similar to that of the embodiment II, detailed descriptions may be referencing to that of the embodiment II, and will not be stated in details herein. However, a difference in between is:

In the embodiment II, the supporting frame 10 further comprises the second supporting arm 12a, the second supporting arm 12a is arranged above the first supporting arm 11;
one end of the extension spring 41a connects to the second supporting arm 12a, and another end of the extension spring 41a is connected to the rotating arm 20, close to the cutting tool 30 arranged on the rotating arm 20, while the centerline of the extension spring 41a has an angle θ away from the centerline of the rotating arm 20 when the rotating arm 20 locates in the initial region C, and 0°< θ <90°.

In embodiment III, the supporting frame 10 further comprises a second supporting arm 12b and a third supporting arm 13b, wherein, it should be noted that, the second supporting arm 12b in the embodiment III, although having a same name, position arranged same to the second supporting arm 12a in the embodiment II, they make a different function; the third supporting arm 13b is located above and arranged opposite to the rotating arm 20, and the third supporting arm 13b is arranged in parallel to the rotating arm 20 when the rotating arm 20 locates in the initial region C, one end of the second supporting arm 12b connects to the first supporting arm 11 in perpendicular, while another end of the second supporting arm 12b connects to the third supporting arm 13b;
one end of the extension spring 41a connects to the third supporting arm 13b, another end of the extension spring 41a is connected to the rotating arm 20, and close to the cutting tool 30 arranged on the rotating arm 20, so as to ensure that the extension spring 41a is able to receive the action force transmitted from the rotating arm 20 fast, without affecting the cutting tool 30, which facilitates a purpose of load release for the cutting tool 30; while the centerline of the extension spring 41a is perpendicularly intersecting to the centerline of the rotating arm 20 when the rotating arm 20 locates in the initial region C.

Since the centerline of the extension spring 41a is perpendicularly intersecting to the centerline of the rotating arm 20 when the rotating arm 20 locates in the initial region C, when the action force on the rotating arm 20 is buffered and attenuated to a certain extent, if the force value of the action force is less than that of the restoring force of the extension spring 41a, comparing to a plurality of other settings of the extension spring 41a, a resistance that the extension spring 41a suffers when making an elastic recovery is smaller, that may drive the rotating arm 20 to return to the initial region C from the rotation region D faster, ensuring the cutting tool 30 returning to a position of normal working faster.

### Embodiment IV:

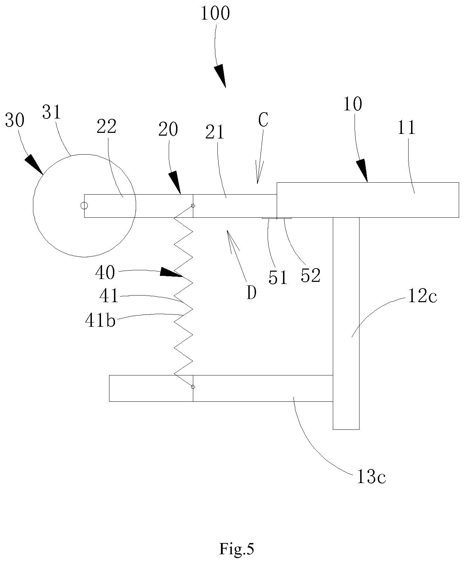

Referencing to FIG. 5, an implementation of the embodiment IV is similar to that of the embodiment III, detailed descriptions may be referencing to that of the embodiment III, and will not be stated in details herein. However, a difference in between is:

In the embodiment III, the load release recovery component 41 is the extension spring 41a.

The supporting frame 10 further comprises the second supporting arm 12b and the third supporting arm 13b, the third supporting arm 13b is located above and arranged opposite to the rotating arm 20, and the third supporting arm 13b is arranged in parallel to the rotating arm 20 when the rotating arm 20 locates in the initial region C, one end of the second supporting arm 12b connects to the first supporting arm 11 in perpendicular, while another end of the second supporting arm 12b connects to the third supporting arm 13b;
one end of the extension spring 41a connects to the third supporting arm 13b, another end of the extension spring 41a is connected to the rotating arm 20, and close to the cutting tool 30 arranged on the rotating arm 20, while the centerline of the extension spring 41a is perpendicularly intersecting to the centerline of the rotating arm 20 when the rotating arm 20 locates in the initial region C.

In the embodiment IV, the load release recovery component 41 is a compression spring 41b. Wherein, the compression spring 41b is a coil spring that takes an axial compression, due to taking a compression, both ends of the compression spring 41b may be open or closed or flattened or smoothed, a cross-section of a material thereof is mainly a circle, or a rectangular or a multi-strand steel, and the compression spring 41b may have an equal pitch or a variable pitch. A shape of the compression spring 41b may be a cylinder, a cone, may be convex or concave at a center, may even be a non-circle or a plurality of various variants of a tail end. Coils in the compression spring 41b have a certain gap, and the compression spring 41b shrinks and deforms, when subjected to an extension load, that stores storage deformation energy.

The supporting frame 10 further comprises a second supporting arm 12c and a third supporting arm 13c, wherein, it should be noted that, the second supporting arm 12c and the third supporting arm 13c in the embodiment IV, although having a name same to the second supporting arm 12b and the third supporting arm 13b in the embodiment III, they have a different position and make a different function; the third supporting arm 13c is located below and arranged opposite to the rotating arm 20, and the third supporting arm 13c is arranged in parallel to the rotating arm 20 when the rotating arm 20 locates in the initial region C, one end of the second supporting arm 12c connects to the first supporting arm 11 in perpendicular, while another end of the second supporting arm 12c connects to the third supporting arm 13c in perpendicular;
one end of the compression spring 41b connects to the third supporting arm 13c, another end of the compression spring 41b is connected to the rotating arm 20 which is close to the cutting tool 30, so as to ensure that the compression spring 41b is able to receive the action force transmitted from the rotating arm 20 fast, without affecting the cutting tool 30, which facilitates a purpose of load release for the cutting tool 30; while the centerline of the compression spring 40b is perpendicularly intersecting to the centerline of the rotating arm 20 when the rotating arm 20 locates in the initial region C, wherein, when the rotating arm 20 locates in the initial region C, the compression spring 41b is stretched open; and when the rotating arm 20 turns to the rotation region D, the compression spring 41b may make a corresponding shrink according to the size of the action force transmitted from the rotation arm 20.

When the cutting tool 30 is subjected to a compression, the rotating arm 20 will take the cutting tool 30 rotate downwards, and compress the compression spring 41b, the compression spring 41b will make a corresponding shrink and close according to the size of the action force subjected hereof, while buffering and attenuating the action force transmitted from the rotating arm 20, so as to achieve the purpose of load releasing for the cutting tool 30; when the action force on the rotating arm 20 is buffered and attenuated to a certain extent, if the force value of the action force is less than that of the restoring force of the compression spring 41b, the compression spring 41b will drive the rotating arm 20 return slowly to the initial region C from the rotation region D, according to an attenuation of the action force on the rotating arm 20, while being stretched and extended following the rotating arm 20 returning to the initial region C from the rotation region D.

### Embodiment V:

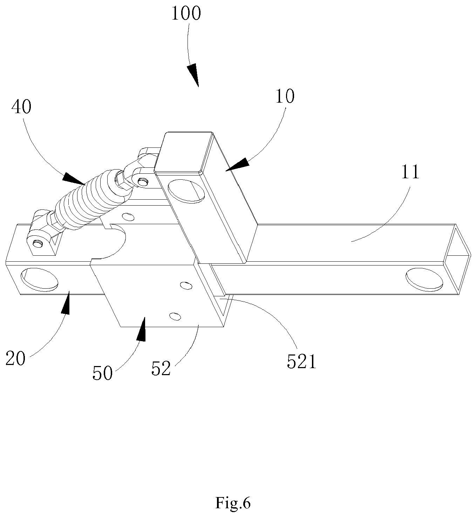

Referencing to FIG. 6, an implementation of the embodiment V is similar to that of the embodiment I, detailed descriptions may be referencing to that of the embodiment I, and will not be stated in details herein. However, a difference in between is:
in the embodiment V, the cutting load release device 100 further comprises a fixation mechanism 50, applied to locking and fixing the rotating arm 20, in order to fix the rotating arm 20 at any one position between the initial region C and the rotation region D.

Through a setting of the fixation mechanism 50, it is possible to fix the rotating arm 20 to any one position between the initial region C and the rotation region D, thus making the rotating arm 20 from arranging rotatablly on the first supporting arm 11 and being able to be adjusted freely, to arranging fixedly on the first supporting arm 11. Therefore, in a case of taking an processing efficiency of the cutting device as a first priority, it is possible to fix the rotating arm 20 in the initial region C by the fixation mechanism 50, and the cutting tool 30 will also be fixed following a fixation of the rotating arm 20, that makes the cutting tool 30 locating in the initial region C have a best cutting efficiency, and it is possible to adjust the cutting device in a whole to be one having a high processing efficiency;

Preferably, the fixation mechanism 50 in the present embodiment comprises a locking screw (not shown in the figures), one end of the locking screw connects to the rotating arm 20, another end connects to the first supporting arm 11. An arrangement of the locking screw is easy to install, with a simple structure.

### Embodiment VI:

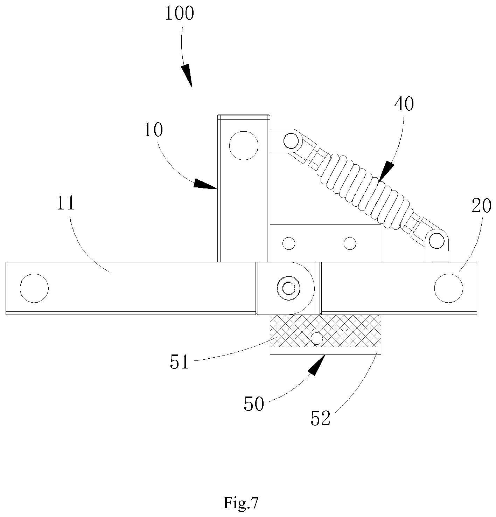

Referencing to FIG. 6 and FIG. 7, an implementation of the embodiment VI is similar to that of the embodiment V, detailed descriptions may be referencing to that of the embodiment V, and will not be stated in details herein. However, a difference in between is:
in the embodiment V, the fixation mechanism 50 comprises a locking screw, and one end of the locking screw connects to the rotating arm 20, while another end connects to the first supporting arm 11.

In the embodiment VI, the fixation mechanism 50 comprises a vibration damping pad 51, and a holder 52 applied to holding and positioning the vibration damping pad 51, the holder 52 connects fixedly to the supporting frame 10, and the holder 52 has an accommodation groove 521 arranged, applied to accommodating the vibration damping pad 51, the accommodation groove 521 accommodates a connection part between the rotating arm 20 and the first supporting arm 11; the vibration damping pad 51 is arranged in the accommodation groove 521, and touches both of the rotating arm 20 and the first supporting arm 11.

Wherein, with an arrangement of the vibration damping pad 51, it is possible to set a different hardness according to any actual requirements. If it is needed for the vibration damping pad 51 to totally resist both of the rotating arm 20 and the first supporting arm 11, so as to fix the rotating arm 20 in the initial region C, it is possible to select a vibration damping pad 51 with a Shore hardness of 70-100 HA, and most of the cases like this are taking the processing efficiency of the cutting device as a first priority; if it is needed that the vibration damping pad 51 makes an action of buffering and damping to the rotating arm 20, it is possible to select a vibration damping pad 51 with a Shore hardness of 30-60 HA. Also, it may be seen that, the setting of the vibration damping pad 51 may be flexibly set according to an actual situation and a customer need.

In addition, the vibration damping pad 51 may be made of a rubber material, or other plastic materials, or other soft vibration damping materials.

The above descriptions are only the preferred embodiments of the present invention, and the configuration is not limited to the above-listed shapes, but any modifications falling within the scope of the claims are to be protected.

## Claims

1. A cutting load release device for cutting equipment, comprising:
a supporting frame (10), applied to mounting a plurality of components and supporting the components, the supporting frame (10) comprises a first supporting arm (11);
a rotating arm (20), applied to moving a plurality of components thereon by rotating, and making the components be able to move to another position when the components are being pressed, the rotating arm (20) comprises a first (21) end and a second end (22) arranged opposite to the first end (21), the first end (21) of the rotating arm (20) is arranged rotatably on the first supporting arm (11), while between the rotating arm (20) and the first supporting arm (11), a rotation region (D) is arranged, which provides the rotating arm (20) to be rotatable relative to the first supporting arm (11);
a cutting tool (30) comprising a working wheel (31) and a diamond beaded rope winding on the working wheel (31), applied to cutting a cutting object, the cutting tool (30) is arranged rotatably on the second end (22) of the rotating arm (20); and
a load release mechanism (40), applied to performing an unloading operation on an abnormally large load afforded by the cutting tool (30), due to an abnormal condition, the load release mechanism (40) comprises a load release recovery component (41), which may unload the abnormally large load afforded by the cutting tool (30), wherein one end of the load release recovery component (41) connects to the supporting frame (10), while another end of the load release recovery component (41) connects to the rotating arm (20),
**characterized in that**
between the rotating arm (20) and the first supporting arm (11), there is further an initial region (C), which provides the rotating arm (20) to be stationary relative to the first supporting arm (11), and
the load release recovery component (41) may also drive the rotating arm (20) to return to the initial region (C) from the rotation region (D).

2. The cutting load release device according to claim 1, wherein the load release recovery component (41) is an extension spring (41a).

3. The cutting load release device according to claim 2, wherein one end of the extension spring (41a) connects to the first supporting arm (11), while another end of the extension spring (41a) is connected to the rotating arm (20), and close to the cutting tool (30) arranged on the rotating arm (20), while a centerline of the extension spring (41a) overlaps a centerline of the rotating arm (20) when the rotating arm (20) locates in the initial region (C).

4. The cutting load release device according to claim 2, wherein the supporting frame (10) further comprises a second supporting arm (12a), the second supporting arm (12a) is arranged above the first supporting arm (11);
one end of the extension spring (41a) connects to the second supporting arm (12a), and another end of the extension spring (41a) is connected to the rotating arm (20), close to the cutting tool (30) arranged on the rotating arm (20), while the centerline of the extension spring (41a) has an angle θ away from the centerline of the rotating arm (20) when the rotating arm (20) locates in the initial region (C), and 0°< θ <90°.

5. The cutting load release device according to claim 2, wherein the supporting frame (10) further comprises the second supporting arm (12b) and a third supporting arm (13b), the third supporting arm (13b) is located above and arranged opposite to the rotating arm (20), and the third supporting arm (13b) is arranged in parallel to the rotating arm (20) when the rotating arm (20) locates in the initial region (C), one end of the second supporting arm (12b) connects to the first supporting arm (11), while another end of the second supporting arm (12b) connects to the third supporting arm (13b);
one end of the extension spring (41a) connects to the third supporting arm (13b), another end of the extension spring (41a) is connected to the rotating arm (20), and close to the cutting tool (30) arranged on the rotating arm (20), while the centerline of the extension spring (41a) is perpendicularly intersecting the centerline of the rotating arm (20) when the rotating arm (20) locates in the initial region (C).

6. The cutting load release device according to claim 1, wherein the load release recovery component (41) is a compression spring (41b).

7. The cutting load release device according to claim 6, wherein the supporting frame (10) comprises the second supporting arm (12c) and the third supporting arm (13c), the third supporting arm (13c) is located below and arranged opposite to the rotating arm (20), and the third supporting arm (13c) is arranged in parallel to the rotating arm (20) when the rotating arm (20) locates in the initial region (C), one end of the second supporting arm (12c) connects to the first supporting arm (11), while another end of the second supporting arm (12c) connects to the third supporting arm (13c);
one end of the compression spring (41b) connects to the third supporting arm (13c), another end of the compression spring (41b) is connected to the rotating arm (20), and close to the cutting tool (30) arranged on the rotating arm (20), while the centerline of the compression spring (41b) is perpendicularly intersecting the centerline of the rotating arm (20) when the rotating arm (20) locates in the initial region (C).

8. The cutting load release device according to any one of claims 1-7, wherein the cutting load release device (100) further comprises a fixation mechanism (50), applied to locking and fixing the rotating arm (20), in order to fix the rotating arm (20) at any one position between the initial region (C) and the rotation region (D).

9. The cutting load release device according to claim 8, wherein the fixation mechanism (50) comprises a locking screw, one end of the locking screw connects to the rotating arm (20), while another end thereof connects to the first supporting arm (11).

10. The cutting load release device according to claim 8, wherein the fixation mechanism (50) comprises a vibration damping pad (51), and a holder (52) applied to holding and positioning the vibration damping pad (51), the holder (52) connects fixedly to the supporting frame (10), and the holder (52) has an accommodation groove (521) arranged, applied to accommodating the vibration damping pad (51), the accommodation groove (521) accommodates a connection part between the rotating arm (20) and the first supporting arm (11); the vibration damping pad (51) is arranged in the accommodation groove (521), and touches both of the rotating arm (20) and the first supporting arm.

## Patentansprüche

1. Schneidlastfreigabevorrichtung für eine Schneidausrüstung, umfassend:
einen Tragrahmen (10), der zur Montage einer Vielzahl von Bauteilen und zum Tragen der Bauteile dient, wobei der Tragrahmen (10) einen ersten Tragarm (11) umfasst;
einen Dreharm (20), der dazu dient, eine Vielzahl von Bauteilen daran durch Drehung zu bewegen, und der dafür sorgt, dass sich die Bauteile in eine andere Position bewegen können, wenn Druck auf die Bauteile ausgeübt wird, wobei der Dreharm (20) ein erstes Ende (21) und ein entgegengesetzt zu dem ersten Ende (21) angeordnetes zweites Ende (22) umfasst, das erste Ende (21) des Dreharms (20) drehbar an dem ersten Tragarm (11) angeordnet ist, während zwischen dem Dreharm (20) und dem ersten Tragarm (11) ein Drehbereich (D) angeordnet ist, der den Dreharm (20) relativ zu dem ersten Tragarm (11) drehbar macht;
ein Schneidwerkzeug (30), das ein Arbeitsrad (31) und ein auf das Arbeitsrad (31) gewickelten Diamantperlenseil, das zum Schneiden eines Schneidobjekts eingesetzt wird, umfasst, wobei das Schneidwerkzeug (30) drehbar an dem zweiten Ende (22) des Dreharms (20) angeordnet ist; und
einen Lastfreigabemechanismus (40), der zum Durchführen eines Entlastungsvorgangs bei einer abnormal großen Last, die durch das Schneidwerkzeug (30) aufgebracht wird, aufgrund eines abnormalen Zustands angewendet wird, wobei der Lastfreigabemechanismus (40) eine Lastfreigabe-Wiederherstellungskomponente (41) umfasst, die die abnormal große Last, die durch das Schneidwerkzeug (30) aufgebracht wird, entlasten kann, wobei ein Ende der Lastfreigabe-Wiederherstellungskomponente (41) mit dem Tragrahmen (10) verbunden ist, während ein anderes Ende der Lastfreigabe-Wiederherstellungskomponente (41) mit dem Dreharm (20) verbunden ist,
**dadurch gekennzeichnet, dass**
zwischen dem Dreharm (20) und dem ersten Tragarm (11) weiterhin ein Anfangsbereich (C) vorhanden ist, der dafür sorgt, dass der Dreharm (20) relativ zu dem ersten Tragarm (11) stationär ist, und
die Lastfreigabe-Wiederherstellungskomponente (41) auch den Dreharm (20) antreiben kann, um aus dem Drehbereich (D) in den Anfangsbereich (C) zurückzukehren.

2. Schneidlastfreigabevorrichtung nach Anspruch 1, wobei die Lastfreigabe-Wiederherstellungskomponente (41) eine Zugfeder (41a) ist.

3. Schneidlastfreigabevorrichtung nach Anspruch 2, wobei ein Ende der Zugfeder (41a) mit dem ersten Tragarm (11) verbunden ist, während ein anderes Ende der Zugfeder (41a) mit dem Dreharm (20) nahe bei dem an dem Dreharm (20) angeordneten Schneidwerkzeugs (30) verbunden ist, während eine Mittellinie der Zugfeder (41a) eine Mittellinie des Dreharms (20) überlappt, wenn sich der Dreharm (20) in dem Anfangsbereich (C) befindet.

4. Schneidlastfreigabevorrichtung nach Anspruch 2, wobei der Tragrahmen (10) ferner einen zweiten Tragarm (12a) umfasst, wobei der zweite Tragarm (12a) oberhalb des ersten Tragarms (11) angeordnet ist;
ein Ende der Zugfeder (41a) mit dem zweiten Tragarm (12a) verbunden ist, und ein anderes Ende der Zugfeder (41a) mit dem Dreharm (20) nahe bei dem Schneidwerkzeug (30), das auf dem Dreharm (20) angeordnet ist, verbunden ist, während die Mittellinie der Zugfeder (41a) einen Winkel θ von der Mittellinie des Dreharms (20) entfernt aufweist, wenn der Dreharm (20) sich in dem Anfangsbereich (C) befindet, und 0° < θ < 90°.

5. Schneidlastfreigabevorrichtung nach Anspruch 2, wobei der Tragrahmen (10) ferner den zweiten Tragarm (12b) und einen dritten Tragarm (13b) umfasst, der dritte Tragarm (13b) sich oberhalb des Dreharms (20) befindet und diesem gegenüber angeordnet ist, und der dritte Tragarm (13b) parallel zu dem Dreharm (20) angeordnet ist, wenn sich der Dreharm (20) in dem Anfangsbereich (C) befindet, wobei ein Ende des zweiten Tragarms (12b) mit dem ersten Tragarm (11) verbunden ist, während ein anderes Ende des zweiten Tragarms (12b) mit dem dritten Tragarm (13b) verbunden ist;
ein Ende der Zugfeder (41a) mit dem dritten Tragarm (13b) verbunden ist, ein anderes Ende der Zugfeder (41a) mit dem Dreharm (20) nahe bei dem an dem Dreharm (20) angeordneten Schneidwerkzeug (30) verbunden ist, während die Mittellinie der Zugfeder (41a) die Mittellinie des Dreharms (20) senkrecht schneidet, wenn sich der Dreharm (20) in dem Anfangsbereich (C) befindet.

6. Schneidlastfreigabevorrichtung nach Anspruch 1, wobei die Lastfreigabe-Wiederherstellungskomponente (41) eine Druckfeder (41b) ist.

7. Schneidlastfreigabevorrichtung nach Anspruch 6, wobei der Tragrahmen (10) den zweiten Tragarm (12c) und den dritten Tragarm (13c) umfasst, der dritte Tragarm (13c) sich unterhalb des Dreharms (20) befindet und diesem gegenüber angeordnet ist, und der dritte Tragarm (13c) parallel zu dem Dreharm (20) angeordnet ist, wenn sich der Dreharm (20) in dem Anfangsbereich (C) befindet, ein Ende des zweiten Tragarms (12c) mit dem ersten Tragarm (11) verbunden ist, während ein anderes Ende des zweiten Tragarms (12c) mit dem dritten Tragarm (13c) verbunden ist;
ein Ende der Druckfeder (41b) mit dem dritten Tragarm (13c) verbunden ist, ein anderes Ende der Druckfeder (41b) mit dem Dreharm (20) nahe bei dem an dem Dreharm (20) angeordneten Schneidwerkzeug (30) verbunden ist, während die Mittellinie der Druckfeder (41b) die Mittellinie des Dreharms (20) senkrecht schneidet, wenn sich der Dreharm (20) in dem Anfangsbereich (C) befindet.

8. Schneidlastfreigabevorrichtung nach einem der Ansprüche 1-7, wobei die Schneidlastfreigabevorrichtung (100) ferner einen Befestigungsmechanismus (50) umfasst, der zum Verriegeln und Befestigen des Dreharms (20) eingesetzt wird, um den Dreharm (20) in einer beliebigen Position zwischen dem Anfangsbereich (C) und dem Drehbereich (D) zu fixieren.

9. Schneidlastfreigabevorrichtung nach Anspruch 8, wobei der Befestigungsmechanismus (50) eine Feststellschraube umfasst, wobei ein Ende der Feststellschraube mit dem Dreharm (20) verbunden ist, während ihr anderes Ende mit dem ersten Tragarm (11) verbunden ist.

10. Schneidlastfreigabevorrichtung nach Anspruch 8, wobei der Befestigungsmechanismus (50) ein schwingungsdämpfendes Kissen (51) und einen Halter (52) umfasst, der zum Halten und Positionieren des schwingungsdämpfenden Kissens (51) angebracht ist, der Halter (52) fest mit dem Tragrahmen (10) verbunden ist und der Halter (52) eine Aufnahmenut (521) aufweist, die zur Aufnahme des schwingungsdämpfenden Kissens (51) angebracht ist, die Aufnahmenut (521) einen Verbindungsteil zwischen dem Dreharm (20) und dem ersten Tragarm (11) aufnimmt; und das schwingungsdämpfende Kissen (51) in der Aufnahmenut (521) angeordnet ist und sowohl den Dreharm (20) als auch den ersten Tragarm berührt.

## Revendications

1. Dispositif de libération de charge de coupe pour un équipement de coupe, comprenant :
un cadre de support (10), utilisé pour monter une pluralité de composants et pour supporter les composants, le cadre de support (10) comprenant un premier bras de support (11) ;
un bras rotatif (20), utilisé pour déplacer une pluralité de composants sur celui-ci par rotation, et pour rendre les composants aptes à se déplacer jusqu'à une autre position quand les composants ont été pressés, le bras rotatif (20) comprenant une première extrémité (21) et une seconde extrémité (22) agencée à l'opposé de la première extrémité (21), la première extrémité (21) du bras rotatif (20) étant agencée de manière rotative sur le premier bras de support (11), tandis que, entre le bras rotatif (20) et le premier bras de support (11), une région de rotation (D) est agencée, qui permet au bras rotatif (20) d'être mis en rotation relativement au premier bras de support (11) ;
un outil de coupe (30) comprenant une roue de travail (31) et une corde perlée diamantée enroulée sur la roue de travail (31), utilisé pour couper un objet de coupe, l'outil de coupe (30) étant agencé de manière rotative sur la seconde extrémité (22) du bras rotatif (20) ; et
un mécanisme de libération de charge (40), utilisé pour exécuter une opération de décharge sur une charge anormalement grande exercée sur l'outil de coupe (30), du fait d'une condition anormale, le mécanisme de libération de charge (40) comprenant un composant de récupération de libération de charge (41), qui peut décharger la charge anormalement grande exercée sur l'outil de coupe (30), dans lequel une extrémité du composant de récupération de libération de charge (41) est connectée au cadre de support (10), tandis qu'une autre extrémité du composant de récupération de libération de charge (41) est connectée au bras rotatif (20),
**caractérisé en ce que**
entre le bras rotatif (20) et le premier bras de support (11), il y a en outre une région initiale (C) qui permet au bras rotatif (20) d'être stationnaire relativement au premier bras de support (11), et
le composant de récupération de libération de charge (41) peut également entraîner le bras rotatif (20) pour le renvoyer jusqu'à la région initiale (C) depuis la région de rotation (D).

2. Dispositif de libération de charge de coupe selon la revendication 1, dans lequel le composant de récupération de libération de charge (41) est un ressort de traction (41a).

3. Dispositif de libération de charge de coupe selon la revendication 2, dans lequel une extrémité du ressort de traction (41a) est connectée au premier bras de support (11), tandis qu'une autre extrémité du ressort de traction (41a) est connectée au bras rotatif (20), et près de l'outil de coupe (30) agencé sur le bras rotatif (20), tandis qu'une ligne centrale du ressort de traction (41a) se chevauche avec une ligne centrale du bras rotatif (20) quand le bras rotatif (20) est situé dans la région initiale (C).

4. Dispositif de libération de charge de coupe selon la revendication 2, dans lequel le cadre de support (10) comprend en outre un deuxième bras de support (12a), le deuxième bras de support (12a) étant agencé au-dessus du premier bras de support (11) ;
une extrémité du ressort de traction (41a) est connectée au deuxième bras de support (12a), et une autre extrémité du ressort de traction (41a) est connectée au bras rotatif (20), près de l'outil de coupe (30) agencé sur le bras rotatif (20), tandis que la ligne centrale du ressort de traction (41a) a un angle θ en éloignement de la ligne centrale du bras rotatif (20) quand le bras rotatif (20) est situé dans la région initiale (C), et 0° < θ < 90°.

5. Dispositif de libération de charge de coupe selon la revendication 2, dans lequel le cadre de support (10) comprend en outre le deuxième bras de support (12b) et un troisième bras de support (13b), le troisième bras de support (13b) est situé au-dessus et est agencé à l'opposé du bras rotatif (20), et le troisième bras de support (13b) est agencé en parallèle au bras rotatif (20) quand le bras rotatif (20) est situé dans la région initiale (C), une extrémité du deuxième bras de support (12b) est connectée au premier bras de support (11), tandis qu'une autre extrémité du deuxième bras de support (12b) est connectée au troisième bras de support (13b) ;
une extrémité du ressort de traction (41a) est connectée au troisième bras de support (13b), une autre extrémité du ressort de traction (41a) est connectée au bras rotatif (20), et près de l'outil de coupe (30) agencé sur le bras rotatif (20), tandis que la ligne centrale du ressort de traction (41a) recoupe perpendiculairement la ligne centrale du bras rotatif (20) quand le bras rotatif (20) est situé dans la région initiale (C).

6. Dispositif de libération de charge de coupe selon la revendication 1, dans lequel le composant de récupération de libération de charge (41) est un ressort de compression (41b).

7. Dispositif de libération de charge de coupe selon la revendication 6, dans lequel dans lequel le cadre de support (10) comprend le deuxième bras de support (12c) et le troisième bras de support (13c), le troisième bras de support (13c) est situé en dessous et est agencé à l'opposé du bras rotatif (20), et le troisième bras de support (13c) est agencé en parallèle au bras rotatif (20) quand le bras rotatif (20) est situé dans la région initiale (C), une extrémité du deuxième bras de support (12c) est connectée au premier bras de support (11), tandis qu'une autre extrémité du deuxième bras de support (12c) est connectée au troisième bras de support (13c) ;
une extrémité du ressort de compression (41b) est connectée au troisième bras de support (13c), une autre extrémité du ressort de compression (41b) est connectée au bras rotatif (20), et près de l'outil de coupe (30) agencé sur le bras rotatif (20), tandis que la ligne centrale du ressort de compression (41b) recoupe perpendiculairement la ligne centrale du bras rotatif (20) quand le bras rotatif (20) est situé dans la région initiale (C).

8. Dispositif de libération de charge de coupe selon l'une quelconque des revendications 1 à 7, dans lequel le dispositif de libération de charge de coupe (100) comprend en outre un mécanisme de fixation (50), utilisé pour verrouiller et pour fixer le bras rotatif (20), afin de fixer le bras rotatif (20) à une position quelconque entre la région initiale (C) et la région de rotation (D).

9. Dispositif de libération de charge de coupe selon la revendication 8, dans lequel le mécanisme de fixation (50) comprend une vis de verrouillage, une extrémité de la vis de verrouillage étant connectée au bras rotatif (20), tandis qu'une autre extrémité de celle-ci est connectée au premier bras de support (11).

10. Dispositif de libération de charge de coupe selon la revendication 8, dans lequel le mécanisme de fixation (50) comprend un coussin amortisseur de vibrations (51), et un moyen de maintien (52) utilisé pour maintenir et pour positionner le coussin amortisseur de vibrations (51), le moyen de maintien (52) est connecté de manière fixe au cadre de support (10), et le moyen de maintien (52) a une rainure de logement (521) agencée, utilisée pour loger le coussin amortisseur de vibrations (51), la rainure de logement (521) logeant une partie de connexion entre le bras rotatif (20) et le premier bras de support (11) ; le coussin amortisseur de vibrations (51) étant agencé dans la rainure de logement (521), et étant en contact à la fois avec le bras rotatif (20) et avec le premier bras de support.
